# EUROPEAN PATENT APPLICATION

(11) **EP 0 706 153 A2**
(43) Date of publication of application: **10.04.1996**
(21) Application number: 95202633.4
(22) Date of filing: 30.09.1995
(51) Int. Cl.: G06K 19/18

(54) **First-use security seal for credit cards and the like**

(30) Priority: 06.10.1994 IT MI942039
(71) Applicant: ARTIGRAFICHE PAGANI S.r.l., I-20020 Lazzate (Milano) (IT)
(72) Inventor: Pagani, Pietro, I-20020 Lazzate (Milano) (IT)
(74) Representative: Falcetti, Carlo

(57) **Abstract**

A first-use security seal for credit cards (1) and the like formed from a sheet of resistant plastics material, preferably polyester, having dimensions substantially equal to those of a credit card, comprising a central strip (6) which is coated on one face with metallic ink (16) as an electromagnetic shield and two contiguous strips (5,7) with adhesive (8) applied to the coated side of the sheet, the sheet being perforated to allow the removal of the said central strip (6) after the said sheet has been permanently attached to a credit card (1) by means of the said adhesive (8) on the contiguous strips (5,6).

## Description

The present invention concerns a security seal for credit cards and the like such as telephone cards, cards for automatic payment of motorway tolls, vending machine cards, all having a magnetic strip for the reading and writing of coded information.

Cards of this type are increasingly used for payment instead of money but their distribution to the user is a fundamental problem.

Such cards usually have an initial predetermined monetary or other value encoded in the magnetic strip, being equivalent to a credit value which is usable according to predetermined conditions.

The magnetic strip can also hold confidential security information which allows the card to be used in conjunction with other secret information such as personal access codes and the like.

It must therefore be ensured that up until the moment that the card is delivered to the legitimate user, it will not have been used, or even read, in order to extract the information contained thereon.

For example it is known that in the case of cards having a limited monetary value for a specific use which are not personal to the user, such as telephone cards, the guarantee of first use is ensured by the card's integrity.

Use of the card in a telephone means that a portion of the card must actually be removed and telephones will recognise a whole card and refuse to take it.

Nothing prevents the information on the magnetic strip from being read or modified using appropriate apparatus, even without removing the portion of the card as described above, but the wrongdoer will not benefit from such information.

Although this strategy is adequate for certain applications it does not satisfy the demand which exists in the majority of cases of ensuring that the information contained on the card has not been read or modified before its delivery to the legitimate owner, to whom a guarantee of this fact is given.

To this end it is known that the majority of credit cards and the like are delivered to the user in a sealed paper or plastics envelope.

This ensures that in the course of distributing the card it cannot have been either read or used, at least after the envelope has been sealed.

The possibility clearly exists however that the sealed envelope can be removed and replaced with an envelope of the same type, leaving no trace of the operation on the card.

The security given by the sealed envelope is therefore unsatisfactory.

Furthermore, the sealed envelope is necessarily larger than the card, which makes it cumbersome as well as relatively expensive, in particular if it is made from materials which protect the card from the atmosphere and possible external magnetic fields, thereby impeding possible reading of the card through the security envelope.

In addition in many cases the envelope must be marked with an appropriate code or similar marking to allow the card inside to be identified and to ensure its correct distribution.

This operation clearly increases distribution costs and introduces the possibility of errors in correlating the sealing envelope and the card.

These disadvantages are eliminated by the first-use security seal which is the subject of the present invention in which the seal is made from a thin sheet of adhesive plastics material having dimensions substantially equal to those of the card and which is applied to the face of a card having a magnetic strip.

Along the magnetic strip the plastics sheet has a non-magnetic metallic layer instead of the adhesive which fixes it to the card, which acts as an electro-magnetic shield and impedes reading or alteration of the information on the magnetic strip, without actually adhering to it.

The plastics sheet is appropriately perforated so that the portion of the sheet with the metallic layer can be removed without having to remove the remaining portion of the plastics sheet.

The adhesive used for attaching the plastics sheet to the card is advantageously a permanent adhesive, which prevents the removal of the plastics sheet without leaving visible signs of disturbance.

According to a further aspect of the present invention appropriate graphics can, for additional security, be printed on to the plastics sealing sheet using fluorescent inks which are not visible in natural light, or inks containing photosensitive pigments which are activated by light of a predetermined wavelength, thereby ensuring the authenticity and originality of the seal.

According to a further aspect of the present invention, in order to allow the continuous production of seals using typographic equipment and the easy storage of the finished product, the metallic shield layer is obtained by inking the plastics sheet so as to form a layer of metallic pigment with a thickness substantially equal to the thickness of the adhesive layer, thus ensuring the uniform thickness of the seal which can then easily be stored in rolls of quite considerable dimensions without local pressure points developing which could damage or deform them.

The characteristics and advantages of the present invention will become clearer from the following description of a preferred embodiment and variants thereof with reference to the accompanying drawings in which:
Figure 1 is a schematic perspective view of a credit card of known type;
Figure 2 is a plan view of a security seal made in accordance with the present invention; and
Figure 3 is a section taken along the line A-A of the security seal of Figure 2.

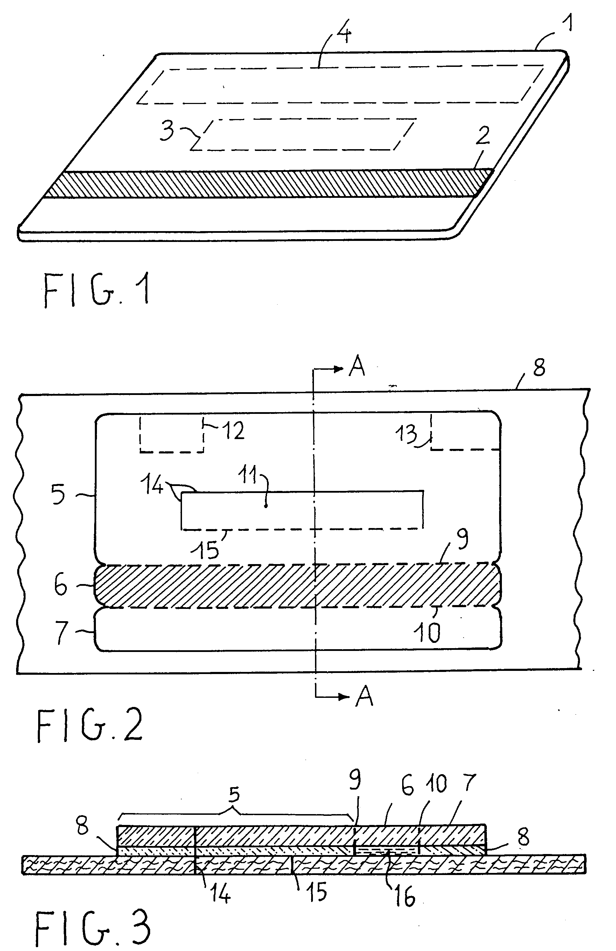

With reference to Figure 1 a credit or payment card comprises a rectangular base 1 made from plastics material, having dimensions in the order of 85 x 55 mm and being approximately 0.3 - 0.8 mm thick.

A magnetic strip 2 which is disposed in the lengthwise direction of the base is formed on one face of the base 1, being approximately 8 - 12 mm wide and intended for the recording of information written by passing a magnetic reading and writing head over the magnetic strip in a relative movement.

On the same face there can be a zone 3 which is reserved for the writing or stamping of permanent graphics, for example the signature of the card owner.

Other areas of the base such as that indicated 4 can carry embossed numeric information and codes which identify the card, the issuing body or bearer of the card, the date of issue etc.

The positioning of the strip and of the information printed and carried on the base generally conforms to standards which allow the cards to be read/written, independently of the card-issuing body, using standardized equipment.

According to the invention, in order to guarantee that the card is not used and that the magnetic strip is not read or altered while it is being distributed to the user, the card is provided with a security seal as shown in Figures 2 and 3.

The seal comprises a transparent sheet of resistant plastics material, preferably polyester, which is approximately 0.1 mm thick with the other dimensions being equal to those of the credit card.

The sheet comprises three contiguous strips 5, 6, 7 extending in the lengthwise direction.

One face of the lateral strips 5; 7 is coated, using known processes, with an adhesive film 8, preferably acrylic adhesive, which adheres firmly and permanently to the plastics base of the card when applied to it.

The adhesive film is approximately 15 - 25 µm thick.

In order to preserve the seal before its first use, its adhesive surface is brought into contact with a non-adhesive temporary paper backing 8 preferably formed as a strip on which there is a plurality of seals.

The central strip 6 of the plastics sheet which forms the seal is coated in one or more passes, using ink containing a metallic pigment, so as to form an ink layer with a thickness comparable to that of the adhesive, that is 10 - 25 µm.

The ink base comprises non-magnetic metal particles of aluminium, copper or non-magnetic alloys having a thickness of approximately 1 - 3 µm and maximum dimensions in the order of 10 - 50 µm.

The ink's base comprises hardening resins, preferably synthetic, which are fast drying and which exhibit high adherence to plastics (alkyd resins, esterified phenolic resins etc).

During the coating process the particles become disposed with their greater dimensions in the plane of the plastics sheet thereby assuring high conductivity of induced parasitic currents circulating in the plane.

This gives rise to an effective shielding of the magnetic recordings on the magnetic strip, the reading and writing of which is achieved dynamically by a relative movement between recording and reading head, even if the thickness of the electromagnetic shield is of the order of magnitude indicated.

To allow the coated central strip 6 to be easily removed from the contiguous adhesive strips once the seal is attached to the credit card, appropriate intermittent die cutting 9, 10 along the sides of the coated strip 6 forms two lines to guide removal.

Advantageously at least one end of the intermediate strip 6 is rounded to enable its easier removal.

The process of forming the seal as described is very simple and economical and is suitable for mass production.

A continuous polyester tape is provided with a continuous coating in such a way as to form the conductive metallic strip 6 on one face.

During the course of this operation appropriate graphics can be printed on the other face (or even on the same face) using either conventional inks or fluorescent or photosensitive inks.

The graphics formed in this way, if exposed to ultraviolet radiation of an appropriate wavelength, constitute a guarantee of the authenticity of the seal in a similar way to a watermark on paper documents.

Immediately after the ink has dried the face of the tape having the conductive inked metallic strip is selectively covered with adhesive on the lateral strips and attached to a paper release liner, also formed as a continuous tape, which protects the adhesive film together with the conductive film.

A further die cutting operation, to a measured depth, allows the separation of the plastics tape into the various plastics sheets each comprising a seal and the precutting of separation lines between the central band 6 and the contiguous bands 5, 7, with a minimum quantity of waste around the edge of each seal which is removed continuously and automatically so as to leave only the seals on the paper release liner, conveniently spaced apart from each other.

By means of the same die cutting operation a rectangular window 11 as illustrated in Figures 2 and 3 can be formed in a zone of the seal intended to cover an area of the credit card in which for example, the signature of the bearer of the credit card is written when the card has been delivered.

Advantageously the perforation of the plastics sheet of the seal and the paper release liner is on only three sides of the window (cut 14 in Figures 2 and 3) and it extends only through the thickness of the paper release liner on the fourth side of the window (cut 15 of Figures 2 and 3).

The plastics sheet of the seal can also be formed with notches or peripheral cut-outs as in 12 and 13, which are also obtained by die cutting and removal together with the waste plastics materials corresponding to the notches, so as to allow other security authentication elements to be applied to the credit card which correspond to the notches, such as adhesive authentication stamps in plastics material such as "CONFIRM" (registered trade mark) produced by the 3M company.

Once the die cutting operation has been performed the release liner carrying seals, in tape form, can be rolled up and stored ready for subsequent distribution and use.

When a credit card upon which the necessary information has been recorded is to be distributed, a seal of the type described is removed from the release liner and attached to the card, thereby ensuring that from this moment on the card cannot be used, read or written magnetically without first removing the central strip 6 of the seal.

If the seal has a signature window 11, removal of the release liner from the seal occurs in part only as due to the perforations 14, 15 the portion of the release liner which corresponds to the window 11 remains adhered to the seal.

The credit card having a seal can therefore be delivered to the user who, having opened the window 11 and signed in the appropriate space, can remove the residual portion of the release liner and close the window 11 thereby sealing his signature and protecting it from any attempt at cancellation or substitution.

In order to use the card the user must simply remove the protective strip.

It is apparent that the seal thus described is very cheap and is of simple and immediate application.

It has all the previously mentioned advantages:
it is less cumbersome;
the magnetic strip of the card is not only protected from any attempted interference but also from disturbance caused by variable external magnetic fields;
any attempt to remove the seal leaves visible and permanent signs; and
the visibility and legibility of the card in the non-protected parts is assured and allows identification without having to correlate the seal and the card.

The preceding description concerns only one preferred embodiment of the invention but it is clear that many variants are possible without departing from its scope.

For example the security seal can also extend over only a limited portion of the card provided the card comprises at least one central shielding electromagnetic strip and two contiguous strips.

The shielding strip could also be made by attaching the plastics sheet which forms the seal to a thin metallic tape (of aluminium, copper or non-metallic alloy) using an appropriate adhesive, but this solution would be more expensive and would have disadvantages such as giving rise to a thicker seal in relation to the shielding strip, corrugations and a lack of surface uniformity of the shield, or more serious gaps and breaks in the latter due to it having a different elasticity from that of the plastics sheet, with a possible local reduction in the protective effect.

In any case the electromagnetic shield is most suitably made from non-magnetic materials.

It is in fact known that ferromagnetic materials in direct contact with a magnetic base, in particular where they have a certain hysteresis, can cause an attenuation of the magnetic recording which could therefore become illegible.

Even worse, they can cause a reproduction of the magnetic recording in the contact magnetic material, giving rise to the possibility of indirectly obtaining from the contact material the information that should be protected and masked by it.

## Claims

1. A first-use security seal for credit cards (1) and the like comprising a plastics sheet (5,6,7) with at least one dimension equal to the largest dimension of a credit card, comprising first (5), second (6) and third (7) strips juxtaposed according to the said direction, the said second (6) strip being between the said first (5) and third (7) strips, one face of the said first and third strips being provided with permanent adhesive (8) for attaching the said sheet to a credit card (1),
- the said second strip (6) having an electromagnetic shield (16) made from a conductive material on the face corresponding to the face on the said first and third strips having the adhesive, the said plastics sheet being intermittently perforated along two parallel separation lines (9,10) of the said strips which allow the removal of the said central strip from the said first (5) and third (7) lateral strips.

2. A seal as in Claim 1, including a temporary non-adhesive release liner (18) for the said seal which adheres to the said adhesive coated face of the said first (5) and third strips (7).

3. A seal as in either of Claims 1 or 2, the said electromagnetic shield (16) comprising a coating of the said second strip with conductive ink based on non-ferromagnetic metallic particles and a hardening fluid carrier.

4. A seal as in Claims 1, 2 and 3 comprising authentication graphics printed on the said plastics sheet.

5. A seal as in Claim 4 in which at least some of the said graphics are formed from fluorescent or photosensitive pigments.

6. A seal as in any of Claims 2, 3, 4, or 5 comprising an openable window (11) formed by die cutting along a lateral strip (5) of the said plastics sheet, a portion of the said non-adhesive base (18) being separated by means of the die cutting, from a surrounding portion of the said non-adhesive base and removably adhered to the said window (11) on the lateral strip (5).

7. A seal as in Claims 1 to 6 in which at least one (5) of the said lateral strips (5,7) has at least one display recess (12,13) on the card.

8. A continuous process for production of first-use security seals for credit cards comprising the following steps:
a) coating a continuous plastics tape with a strip of metallic ink (16) which extends along the said tape in a position intermediate the edges of the said tape;
b) applying a permanent adhesive (8) to strips (5,7) of the said tape adjacent the coated strip (6);
c) attaching the said tape to a non-adhesive release liner (18) by means of the said adhesive;
d) die cutting the said continuous plastics tape to form a plurality of tape pieces separated from one another by a continuous waste frame; and
e) separation of the said continuous waste frame from the said non-adhesive release liner (18).
